(19) Europäisches Patentamt
European Patent Office
Office européen des brevets

(11) Publication number: **0 377 036 A1**

# (12) EUROPEAN PATENT APPLICATION published in accordance with Art. 158(3) EPC

(21) Application number: **88906080.2**

(51) Int. Cl.5: **G01N 27/30, G01N 27/46**

(22) Date of filing: **08.07.88**

(86) International application number: **PCT/JP88/00689**

(87) International publication number: **WO 89/00690 (26.01.89 89/03)**

(30) Priority: **09.07.87 JP 169867/87**

(43) Date of publication of application: **11.07.90 Bulletin 90/28**

(84) Designated Contracting States: **BE DE FR IT**

(71) Applicant: **Terumo Kabushiki Kaisha**
**No. 44-1, Hatagaya 2-chome Shibuya-ku**
**Tokyo 151(JP)**

(72) Inventor: **YAMAGUCHI, Shuichiro Terumo Kabushiki Kaisha**
**2656-1, Ohbuchi Fuji-shi**
**Shizuoka 417(JP)**
Inventor: **SUZUKI, Takanao Terumo Kabushiki Kaisha**
**2656-1, Ohbuchi Fuji-shi**
**SHizuoka 417(JP)**
Inventor: **SHIMOMURA, Takeshi Terumo Kabushiki Kaisha**
**2656-1, Ohbuchi Fuji-shi**
**SHizuoka 417(JP)**
Inventor: **OYAMA, Noboru**
**5-24, Shinmachi 3-chome**
**Fuchu-shi Tokyo 183(JP)**

(74) Representative: **Gillard, Marie-Louise et al**
**Cabinet Beau de Loménie 55, Rue d'Amsterdam**
**F-75008 Paris(FR)**

## (54) ION SENSOR.

(57) An ion sensor which is prepared by covering a conductive base (1) with a redox function layer (5) composed of an electrolytic polymer membrane of a hydroxy or amino compound having a biphenyl skeleton, or a mixture thereof, etc., and covering the surface with an ion-selective layer (4). This ion sensor suffers less dissolution of the redox function layer (5) into the ion-selective layer (4), thus showing stable properties and having a long life.

FIG. 1

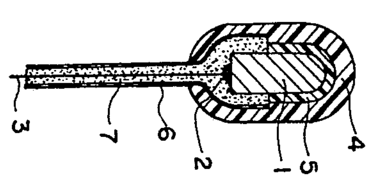

EP 0 377 036 A1

# SPECIFICATION

## ION SENSOR

### Technical Field

The present invention relates to an ion sensor and, more particularly, to a solid-type ion sensor having a multilayered structure.

### Background Art

Examples of a conventional ion sensor formed by coating a redox function layer (e.g., 2,6-xylenol) on a carbon material layer formed on an electrically conductive substrate or an electrically conductive carbon material, or further coating an ion-selective layer thereon are disclosed in Japanese Patent Laid-Open Nos. 61-155949, 61-251764, 61-266952 and 62-21055 and Japanese Patent Application No. 60-290812.

In the above examples, however, the poly(2,6-xylenol) film as a redox function layer transits to a plasticizer of an ion-selective layer (PVC-carrying ion carrier film) with time, thereby degrading the stability of the ion sensor.

### Disclosure of Invention

It is an object of the present invention to provide an ion sensor comprising a redox function layer with less elution to an ion-selective layer.

The present inventors have studied a film capable of solving the above problem and found that one of main components of a film prepared by an electrolytic

oxidation polymerization reaction of 2,6-xylenol is diphenoquinone and this substance allows a layer to be easily dissolved in a solvent. As a result of extensive studies of whether or not a dense film with a high solvent resistance can be prepared if the electrolytic reaction is started not from a monomer but from a dimer or higher to cause a polymerization reaction, the present inventors have found that a thin film having a high solvent resistance and a redox function can be prepared, thereby completing the present invention.

An ion sensor of the present invention comprises: an electrically conductive substrate; a redox function layer consisting of a polymer of a compound having a redox function covering the electrically conductive substrate; and an ion-selective layer covering the redox function layer.

In the above arrangement, the redox function layer uses as a reaction material a polymer which is a dimer or higher and, most preferably, a hydroxyl group compound or amino group compound having a biphenyl skeleton, or a compound mixture thereof.

As a first feature, a polymer film formed by electrolysing the above compound on a carbon material is a thin dense film strongly coated on the carbon material.

As a second feature, if an ion-selective layer (ion carrier film) is coated on the redox function layer, the

redox function layer causes almost no elution into a plasticizer in the ion carrier film (consisting of an ion carrier substance carrying PVC).

According to the present invention, there is provided an ion sensor comprising a redox function layer with less elution to an ion-selective layer (ion carrier film).

More specifically, the following effects can be obtained by the present invention.

(1) A redox function layer can be coated on a carbon material very strongly, and a polymer of a dimer or higher is used as a material to synthesize a layer to cover the surface of the carbon material by an electrolytic reaction. Therefore, a very strong redox function layer can be coated on the carbon material surface.

(2) The redox function layer of item (1) causes almost no elution into an ion-selective layer (ion carrier film) coated thereon. As a result, the sensor can be stably used for a long time period.

(3) The sensor can be utilized in an electrically conductive substrate (e.g., a metal material, a semiconductor and an isolated gate type semiconductor) on which the carbon material of item (1) can be coated. Therefore, a wide variety of applications such as an electrically conductive sheet sensor, a sensor utilizing a semiconductor and a linear sensor can be made.

Brief Description of Drawings

Fig. 1 is a sectional view showing an ion sensor of an example using BPG;

Fig. 2 is a sectional view showing an ion sensor of another example using a metal wire;

Figs. 3A to 3C are graphs showing results of experiments of a hydrogen ion sensor comprising a p,p'-biphenol polymer film;

Figs. 4A to 4C are graphs showing results of experiments of a hydrogen ion sensor comprising an o,o'-biphenol polymer film;

Figs. 5A to 5C are graphs showing results of experiments of a potassium ion sensor comprising a p,p'-biphenol polymer film;

Figs. 6A to 6C are graphs showing results of experiments of a potassium ion sensor comprising an o,o'-biphenol polymer film;

Figs. 7A to 7C are graphs showing results of experiments of a chlorine ion sensor comprising a p,p'-biphenol polymer film;

Figs. 8A to 8C are graphs showing results of experiments of a chlorine ion sensor comprising an o,o'-biphenol polymer film;

Fig. 9A is a plan view showing an electrically conductive carbon electrode prepared from a printed circuit board;

Fig. 9B is a plan view showing an ion sensor of still another example using a printed circuit board;

Figs. 10A and 10B are graphs showing cyclic voltamograms of electrolytic oxidation polymerization reactions of o,o'-biphenol; and

Figs. 11A and 11B are graphs showing cyclic voltamograms of electrolytic oxidation polymerization reactions of p,p'-biphenol.

Best Mode of Carrying Out the Invention

The present invention will be described in detail below by way of its examples with reference to the accompanying drawings.

<Example 1>

A method of coating a film on an electrically conductive carbon electrode will be described below.

Fig. 1 is a sectional view showing a structure of an ion sensor of this example.

A column 1 having a diameter of 1 mm and a length of 3 mm was cut out from a plate of basal plane pyrolytic graphite (BPG: manufactured by Union Carbite Co.). A lead wire 3 (0.1-mm diameter polytrethane copper wire) was adhered on one bottom surface of the column 1 using an electrically conductive adhesive 2 (C-850-6: manufactured by Amicon Co.). The column 1 was then inserted in a polyethylene fluoride resin tube 6 (Teflon having an inner diameter of 1.3 mm: manufactured by Du Pont de Nemours, E.I. Co.) and isolated by an

isolating adhesive 7 (TB2067: manufactured by Three Bond Co.), thereby preparing a BPG electrode.

A 3-electrode cell having the aove electrically conductive BPG as an active electrode, a saturated sodium chloride calomel electrode (SSCE) as a reference electrode, and a platinum net as a counter electrode was used to form a p,p'-biphenol polymer film 5 as a redox function layer by an electrolytic polymerization reaction performed under the following electrolytic oxidation conditions.

(Electrolytic oxidation conditions)

Electrolyte:

| | |
|---|---|
| 0.05 M | p,p'-biphenol |
| 0.2 M | sodium perchlorate |
| solvent | acetonitrile solution |

Electrolytic temperature: 23°C

Electrolytic conditions:

After the electrolytic potential was swept twice from 0 to +1.5 V (vs. SSCE) at a sweep rate of 50 mV/sec, a constant potential electrolysis reaction was performed at +1.5 V for ten minutes.

Fig. 11B shows a cyclic voltamogram of this electrolytic reaction.

Dipping formation of a hydrogen ion carrier film 4 as an ion-selective layer on the p,p'-biphenol polymer film 5 was performed under the following conditions.

(Hydrogen ion carrier film)

| | | |
|---|---|---|
| TDDA | 313 mg | ( 6 wt%) |
| KTpClPB | 31.3 mg | ( 0.6 wt%) |
| DOS | 3255 mg | (62.3 wt%) |
| PVC | 1625 mg | (31.1 wt%) |
| THF solution | 20 mℓ | |

<Comparative Example 1>

A hydrogen ion sensor was fabricated following the same procedures as in Example 1 except that 2,6-xylenol was used in place of p,p'-biphenol.

<Experimental Example 1>

Characteristics between the electrode potential and the pH of the hydrogen ion sensor fabricated in Example 1 were measured using an SSCE as a reference electrode, at a temperature of 37° C, and within the pH range of a standard phosphoric acid buffer solution of 6.0 to 8.7.

As is apparent from the measurement results shown in Fig. 3A, a linearity was established between the electrode potential and the pH, and the slope of the line was about -60.63 mV/pH. This value was much the same as the slope of about -60.04 mV/pH obtained when the poly(2,6-xylenol) film prepared by the electrolytic polymerization method in Comparative Example 1 was used. In addition, almost no elution of the p,p'-biphenol polymer film to the hydrogen ion sensor was found. That is, the p,p'-biphenol polymer film was strongly coated on BPG.

<Example 2>

A method of coating a film on a carbon substrate electrode prepared by coating and sintering a carbon paste on a metal substrate will be described below. Fig. 2 is a sectional view showing a structure of an ion sensor of this example. A carbon paste 22 (JEF-010: manufactured by Japan Atison K.K.) was sintered (at 150 °C for 30 minutes) to a thickness of about 0.5 mm on a silver wire 21 (diameter = 0.2 mm) covered with an isolating film 20, thereby forming a carbon electrode. A p,p'-biphenol polymer film 23 and a hydrogen ion carrier film 24 similar to those of Example 1 were coated on the surface of this electrode.

Fig. 11A shows a cyclic voltamogram of an electrolytic reaction.

<Example 3>

A carbon paste 22 (JEF-010: manufactured by Japan Atison K.K.) was sintered (at 150°C for 30 minutes) to a thickness of about 0.5 mm on a copper wire 21 (diameter = 0.35 mm) used in place of the silver wire 21 of Example 2, thereby forming a carbon electrode. A p,p'-biphenol polymer film 23 and a hydrogen ion carrier film 24 similar to those of Example 1 were coated on the surface of this electrode.

<Experimental Examples 2 & 3>

Characteristics between the electrode potential and the pH of each of the hydrogen ion sensors fabricated in

Examples 2 and 3 were measured using an SSCE as a reference electrode, and within the pH range of a standard phosphoric acid buffer solution of 6 to 8.7.

As is apparent from the measurement results shown in Figs. 3B and 3C, a linearity was established between the electrode potential and the pH. The slopes of the lines were -72.63 mV/pH and -63.24 mV/pH (temperature = 37°C), respectively. The p,p'-biphenol polymer film did not elute to the hydrogen ion carrier film but was strongly coated on the carbon material.

<Examples 4, 5 & 6>

Hydrogen ion sensors were fabricated following the same procedures as in Examples 1, 2 and 3 except that o,o'-biphenol was used in place of p,p'-biphenol.

(Electrolytic oxidation reaction conditions)

Electrolyte:

| | |
|---|---|
| 0.05 M | o,o'-biphenol |
| 0.2 M | sodium perchlorate |
| solvent | acetonitrile solution |

Electrolytic temperature: 23°C

Electrolytic conditions:

After the electrolytic potential was swept twice from 0 to +1.7 V (vs. SSCE) at a sweep rate of 50 mV/sec, a constant potential electrolytic reaction was performed at +1.7 V for ten minutes.

Figs. 10A and 10B show cyclic voltamograms of the above reaction.

<Experimental Examples 4, 5 & 6>

Characteristics between the electrode potential and the pH of each of the hydrogen ion sensors fabricated in Examples 4, 5 and 6 were measured using an SSCE as a reference electrode, and within the pH range of a standard phosphoric acid buffer solution of 6.0 to 8.7.

As is apparent from the measurement results shown in Figs. 4A to 4C, a linearity was established between the electrode potential and the pH. The slopes of the lines were -66.48 mV/pH, -61.29 mV/pH and -64.06 mV/pH (temperature = 37°C), respectively. The o,o'-biphenol polymer film did not elute to the hydrogen ion carrier film but was strongly coated on the carbon material.

<Example 7>

A potassium ion sensor was fabricated following the same procedures as in Example 1 except that a potassium ion carrier film having potassium ion ($K^+$) selectivity was used in place of a hyrdrogen ion carrier film.

(Potassium ion carrier film composition)

| | |
|---|---|
| valinomycin | 25 mg |
| KTpClPB | 5 mg |
| DOS | 647 mg |
| PVC | 323 mg |
| THF solution | 4 mℓ |

<Comparative Example 2>

A potassium ion sensor was fabricated following the same procedures as in Example 1 except that 2,6-xylenol was used in place of p,p'-biphenol.

<Experimental Example 7>

Characteristics between the electrode potential and log[$K^+$] of the potassium ion sensor fabricated in Example 7 were measured using an SSCE as a reference electrode and within the $K^+$ concentration range of $10^{-3}$ to 1 (mol/liter).

As is apparent from the measurement results shown in Fig. 5A, a good linearity was established between the electrode potential and the log[$K^+$]. The slope of the line was 53.58 mV/log[K+] (temperature = 37°C). This value was better than 48.52 mV/log[$K^+$] of the slope of the poly(2,6-xylenol) film prepared by the electrolytic polymerization method in Comparative Example 2. In the potassium ion sensor of Example 7, the p,p'-biphenol polymer film caused almost no elution to the potassium ion carrier film but was strongly coated on BPG.

<Example 8>

Following the same procedures as in Example 2, a carbon paste 22 (JEF-010: manufactured by Japan Atison K.K.) was sintered (at 150°C for 30 minutes) to a thickness of about 0.5 mm on a silver wire 21 (diameter = 0.2 mm), thereby forming a carbon electrode. A p,p'-biphenol polymer film 23 and a potassium ion

carrier film 24 similar to those of Example 7 were coated on the surface of this electrode to prepare a potassium ion sensor.

<Example 9>

Following the same procedures as in Example 3, a carbon paste 22 (JEF-010: manufactured by Japan Atison K.K.) was sintered (at 150°C for 30 minutes) to a thickness of about 0.5 mm on a copper wire 21 (diameter = 0.2 mm), thereby forming a carbon electrode. A p,p'-biphenol polymer film 23 and a potassium ion carrier film 24 similar to those of Example 7 were coated on the surface of this electrode to prepare a potassium ion sensor.

<Experimental Examples 8 & 9>

Characteristics between the electrode potential and log[$K^+$] of each of the potassium ion sensors fabricated in Examples 8 and 9 were measured using an SSCE as a reference electrode and within the $K^+$ concentration range of $10^{-3}$ to 1 (mol/liter).

As is apparent from the measurement results shown in Figs. 5B and 5C, a linearity was established between the electrode potential and the log[$K^+$]. The slopes of the lines were 57.42 mV/log[K+] and 54.60 mV/log[$K^+$] (temperature = 37°C), respectively. In these potassium ion sensors, the p,p'-biphenol polymer film caused almost no elution to the potassium ion carrier film but was strongly coated on the carbon material.

<Examples 10, 11 & 12>

Potassium ion sensors were fabricated following the same procedures as in Examples 7, 8 and 9 except that o,o'-biphenol was used in place of p,p'-biphenol.

(Electrolytic oxidation reaction conditions)

Electrolyte:

| | |
|---|---|
| 0.05 M | o,o'-biphenol |
| 0.2 M | sodium perchlorate |
| solvent | acetonitrile solution |

Electrolytic temperature: 23°C

Electrolytic conditions:

After the electrolytic potential was swept twice from 0 to +1.7 V (vs. SSCE) at a sweep rate of 50 mV/sec, a constant potential electrolytic reaction was performed at +1.7 V for ten minutes.

<Experimental Examples 10, 11 & 12>

Characteristics between the electrode potential and log[$K^+$] of each of the potassium ion sensors fabricated in Examples 10, 11 and 12 were measured using an SSCE as a reference electrode, and within the $K^+$ concentration range of $10^{-3}$ to 1 (mol/liter).

As is apparent from the measurement results shown in Figs. 6A to 6C, a good linearity was established between the electrode potential and the log[$K^+$]. The slopes of the lines were 60.39 mV/log[$K^+$], 43.76 mV/log[$K^+$] and 49.3 mV/log[$K^+$] (temperature = 37°C),

respectively. The o,o'-biphenol polymer film caused almost no elution to the potassium ion carrier film but was strongly coated on the carbon material.

<Example 13>

A chlorine ion sensor was fabricated following the same procedures as in Example 1 except that a chlorine ion carrier film having chlorine ion ($Cl^-$) selectivity was used in place of a hyrdrogen ion carrier film.

(Chlorine ion carrier film composition)

| | |
|---|---|
| triphenyl tin chloride | 62. 7 mg |
| DOS | 725. 3 mg |
| PVC | 324. 7 mg |
| THF | 10 mℓ |

<Comparative Example 3>

A chlorine ion sensor was fabricated following the same procedures as in Example 13 except that 2,6-xylenol was used in place of p,p'-biphenol.

<Experimental Example 13>

Characteristics between the electrode potential and the pH of the chlorine ion sensor fabricated in Example 13 were measured using an SSCE as a reference electrode and within the $Cl^-$ concentration range of $10^{-3}$ to $10^{-0.5}$ (mol/liter).

As is apparent from the measurement results shown in Fig. 7A, a good linearity was established between the electrode potential and the log[$Cl^-$]. The slope of the line was -78.48 mV/log[$Cl^-$] (temperature = 37°C). The

poly(2,6-xylenol) film prepared by the electrolytic polymerization method in Comparative Example 3 was measured within a narrow $Cl^-$ concentration range of $10^{-2}$ to $10^{-0.5}$ (mol/liter). Although the linearity was established, the slope was as small as -50.91 mV/log[$Cl^-$]. In the potassium ion sensor of Example 13, the p,p'-biphenol polymer film caused almost no elution to the chlorine ion carrier film but was strongly coated on BPG.

<Example 14>

Following the same procedures as in Example 2, a carbon paste 22 (JEF-010: manufactured by Japan Atison K.K.) was sintered (at 150°C for 30 minutes) to a thickness of about 0.5 mm on a silver wire 21 (diameter = 0.2 mm), thereby forming a carbon electrode. A p,p'-biphenol polymer film 23 and a chlorine ion carrier film 24 similar to those of Example 13 were coated on the surface of this electrode to prepare a chlorine ion sensor.

<Example 15>

Following the same procedures as in Example 3, a carbon paste 22 (JEF-010: manufactured by Japan Atison K.K.) was sintered (at 150°C for 30 minutes) to a thickness of about 0.5 mm on a copper wire 21 (diameter = 0.2 mm), thereby forming a carbon electrode. A p,p'-biphenol polymer film 23 and a chlorine ion carrier film 24 similar to those of Example 13 were coated on

the surface of this electrode to prepare a chlorine ion sensor.

<Experimental Examples 14 & 15>

Characteristics between the electrode potential and the pH of each of the chlorine ion sensors fabricated in Examples 14 and 15 were measured using an SSCE as a reference electrode and within the $Cl^-$ concentration range of $10^{-3}$ to $10^{-0.5}$ (mol/liter).

As is apparent from the measurement results shown in Figs. 7B and 7C, a linearity was established between the electrode potential and the log[$Cl^-$]. The slopes of the lines were -48.95 mV/log[$Cl^-$] and -63.86 mV/log[$Cl^-$] (temperature = 37°C), respectively. In these chlorine ion sensors, the p,p'-biphenol polymer film did not elute to the potassium ion carrier film but was strongly coated on the carbon material.

<Examples 16, 17 & 18>

Chlorine ion sensors were fabricated following the same procedures as in Examples 13, 14 and 15 except that o,o'-biphenol was used in place of p,p'-biphenol.

(Electrolytic oxidation reaction conditions)

Electrolyte:

| | |
|---|---|
| 0.05 M | o,o'-biphenol |
| 0.2 M | sodium perchlorate |
| solvent | acetonitrile solution |

Electrolytic temperature: 23°C

Electrolytic conditions:

After the electrolytic potential was swept twice from 0 to +1.7 V (vs. SSCE) at a sweep rate of 50 mV/sec, a constant potential electrolytic reaction was performed at +1.7 V for ten minutes.

<Experimental Examples 16, 17 & 18>

Characteristics between the electrode potential and log[$Cl^-$] of each of the chlorine ion sensors fabricated in Examples 10, 11 and 12 were measured using an SSCE as a reference electrode, and within the $Cl^-$ concentration range of $10^{-3}$ to $10^{-0.5}$ (mol/liter).

As is apparent from the measurement results shown in Figs. 6A to 6C, a good linearity was established between the electrode potential and the log[$Cl^-$]. The slopes of the lines were -69.89 mV/log[$Cl^-$], -61.57 mV/log[$Cl^-$] and -55.06 mV/log[$Cl^-$] (temperature = 37°C), respectively. The o,o'-biphenol polymer film did not elute to the chlorine ion carrier film but was strongly coated on the carbon material.

<Example 19>

A method of coating a film on a carbon substrate electrode prepared by coating and sintering a carbon paste on a printed circuit board will be described below. Fig. 9A shows an electrically conductive carbon electrode of this example, and Fig. 9B schematically shows a structure of an ion sensor of the example.

(1) A carbon paste (viscosity = 150 to 300 Ps: JEF-010 manufactured by Japan Atison K.K.) was coated once (film thickness = about 0.5 mm) by a brush on a part of a substrate (manufactured by Mitsui Mining & Smelting Co., Ltd.: the minimum wire width = 0.1 mm) prepared by printing copper wires on a polyimide film and sintered at a temperature of 150°C for 30 minutes, thereby forming a carbon film-coated substrate 91. The substrate 1 was connected to an urethane-coated copper wire 92 (lead) by a solder 93, and the solder 93 was isolated by a silicone resin 94, thereby preparing an electrically conductive carbon electrode 100.

(2) The carbon-coated printed wiring portion of the electrically conductive carbon electrode prepared in Method (1) was subjected to electrolytic oxidation under the following conditions so as to be covered with a p,p'-biphenol polymer film 101 as a redox function layer and then a hydrogen ion carrier film 102 as an ion-selective layer, thereby fabricating a hydrogen ion sensor 200.

In the electrolytic oxidation reaction, a 3-electrode cell having the electrically conductive carbon electrode 100 as an active electrode, an SSCE as a reference electrode and a platinum net as a counter electrode was used.

(Electrolytic oxidation conditions)

Electrolyte:

| | |
|---|---|
| 0.05 M | p,p'-biphenol |
| 0.2 M | sodium perchlorate |
| solvent | acetonitrile solution |

Electrolytic temperature: 23°C

Electrolytic conditions:

After the electrolytic potential was swept twice from 0 to +1.5 V (vs. SSCE) at a sweep rate of 50 mV/sec, a constant potential electrolysis reaction was performed at +1.5 V for ten minutes.

Dipping formation of a hydrogen ion carrier film 102 as an ion-selective layer on the p,p'-biphenol polymer film 101 was performed under the following conditions.

(Hydrogen ion carrier film)

| | | |
|---|---|---|
| TDDA | 313 mg | ( 6 wt%) |
| KTpClPB | 31.3 mg | ( 0.6 wt%) |
| DOS | 3255 mg | (62.3 wt%) |
| PVC | 1625 mg | (31.1 wt%) |
| THF solution | 20 mℓ | |

<Experimental Example 19>

An equivalent circuit was fabricated using the hydrogen ion sensor of the film substrate prepared in Example 19 and an SSCE electrode, and a relationship between the pH and the electromotive force of the

hydrogen ion sensor was measured within the pH range of a standard buffer solution of 6 to 8.5.

As a result of measurement, a linearity was found between the pH and the electromotive force response, and the slope of the line at this time was -60.10 mV/pH (temperature 37°C). Therefore, since the pH can be measured by the printed wiring film (thin film), this hydrogen ion sensor is highly practical.

<Example 20>

A hydrogen ion sensor was fabricated following the same procedures as in Example 19 except that o,o'-biphenol was used in place of p,p'-biphenol.

<Experimental Example 20>

Characteristics between the electrode potential and the pH of the hydrogen ion sensor fabricated in Example 20 were measured.

As a result, a linearity was found between the pH and the electromotive force response of the hydrogen ion sensor, and the slope at this time was -61.53 mV/pH (temperature = 37°C). A strong o,o'-biphenol polymer film was formed on a film substrate and did not elute to a hydrogen ion carrier film.

<Examples 21 & 22>

Potassium and chlorine ion sensors were fabricated following the same procedures as in Example 19 except that a potassium ion carrier film (Example 7) and a chlorine ion carrier film (Example 13) were used in

place of the hydrogen ion carrier film of Example 19, respectively.

<Experimental Examples 21 & 22>

A relationship between the ion concentration and the electrode potential of each of the ion sensors fabricated in Examples 21 and 22 is as shown in Table 1 below.

Table 1 (measurement temperature: 37°C)

| Experimental Example | Range of Linearity | Slope |
|---|---|---|
| 21 | $pK^+$ = 0 to 3 | -54.0 mV/pK |
| 22 | $pCl^-$ = 0.5 to 3 | 60.5 mV/pCl |

<Examples 23 & 24>

Potassium and chlorine ion sensors were fabricated following the same procedures as in Examples 20 and 21 except that o,o'-biphenol was used in place of p,p'-biphenol.

<Experimental Examples 23 & 24>

The ion concentration and electrode potential of each of the ion sensors fabricated in Examples 23 and 24 were measured. The results are shown in Table 2 below.

Table 2 (measurement temperature = 37°C)

| Experimental Example | Range of Linearity | Slope |
|---|---|---|
| 23 | $pK^+$ = 0 to 3 | -60.25 mV/pK |
| 24 | $pCl^-$ = 0.5 to 3 | 62.9 mV/pCl |

As has been described above, the ion sensor of each of the above examples comprises a redox function layer

with less elution to an ion-selective layer. Therefore, the ion sensor is stable and has a long service life.

In the above examples, p,p'-biphenol and o,o'-biphenol are used as most preferable examples of a polymer. In the present invention, however, any polymer may be used as long as it is a polymer of a hydroxy compound or an amino compound. Typical structures of the polymer will be presented below.

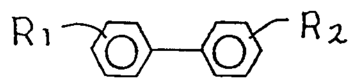

wherein each of $R_1$ and $R_2$ independently represents OH or $NH_2$

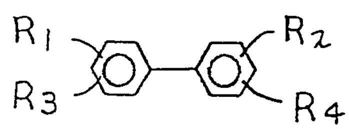

wherein each of $R_1$, $R_2$, $R_3$ and $R_4$ independently represents OH and/or $NH_2$

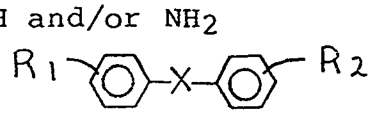

wherein each of $R_1$ and $R_2$ independently represents OH or $NH_2$, and

X represents $-O-$, $-\underset{\underset{O}{\|}}{C}-$, $-CH_2-$, $-\overset{\overset{CH_3}{|}}{\underset{\underset{CH_3}{|}}{C}}-$ or $-\overset{\overset{CF_3}{|}}{\underset{\underset{CF_3}{|}}{C}}-$, and the like.

In the above examples, hydrogen, potassium and chlorine ion sensors are described. The present invention, however, can be applied to another ion sensor or a biosensor such as an enzyme sensor.

It is to be understood that the present invention includes all the changes and additions that fall within the scope of the appended claims.

# C L A I M S

1. An ion sensor comprising:

an electrically conductive substrate;

a redox function layer consisting of a polymer of a compound having a redox function covering said electrically conductive substrate; and

an ion-selective layer covering said redox function layer.

2. A sensor according to claim 1, wherein said electrically conductive substrate is prepared by coating a carbon film containing a carbon material on a metal or semiconductor substrate or on a combination thereof with an isolated gate type field effect transistor (FET).

3. A sensor according to claim 1, wherein said electrically conductive substrate consists of an electrically conductive carbon material.

4. A sensor according to claim 1, wherein said redox function layer is formed by polymerizing a polymer of a hydroxy or amino compound and is selected from the group consisting of the following structures:

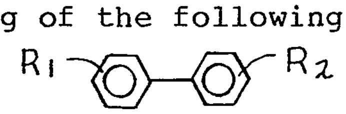

wherein each of $R_1$ and $R_2$ independently represents OH or $NH_2$

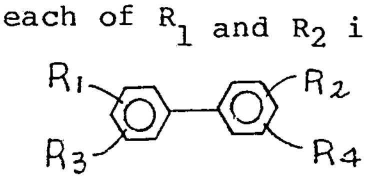

wherein each of $R_1$, $R_2$, $R_3$ and $R_4$ independently represents OH and/or $NH_2$

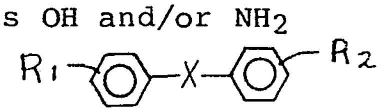

wherein each of $R_1$ and $R_2$ independently represents OH or $NH_2$, and

X represents $-O-$, $\underset{\underset{O}{\|}}{-C-}$, $-CH_2-$, $\overset{CH_3}{\underset{CH_3}{-\overset{|}{\underset{|}{C}}-}}$ or $\overset{CF_3}{\underset{CF_3}{-\overset{|}{\underset{|}{C}}-}}$, and the like.

5. A sensor according to claim 3, wherein said redox function layer is selected from the group consisting of an o,o'-biphenol polymer and a p,p'-biphenol polymer.

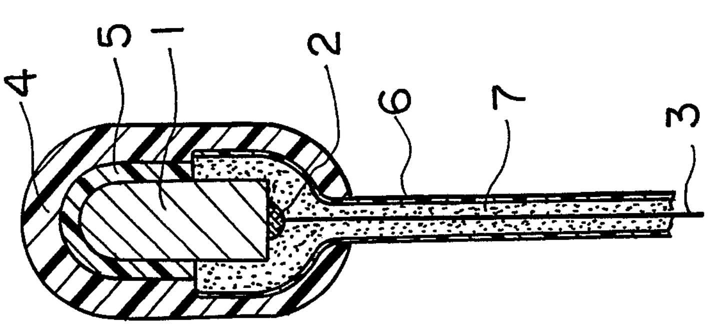


F I G. 1

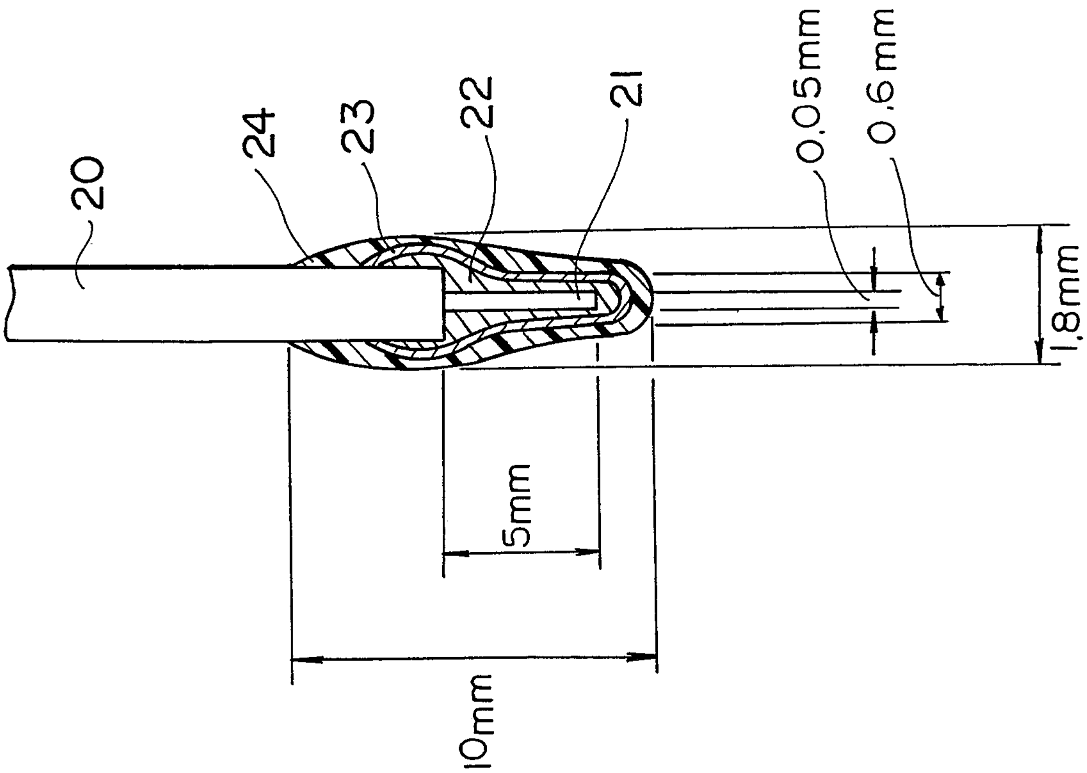


F I G. 2

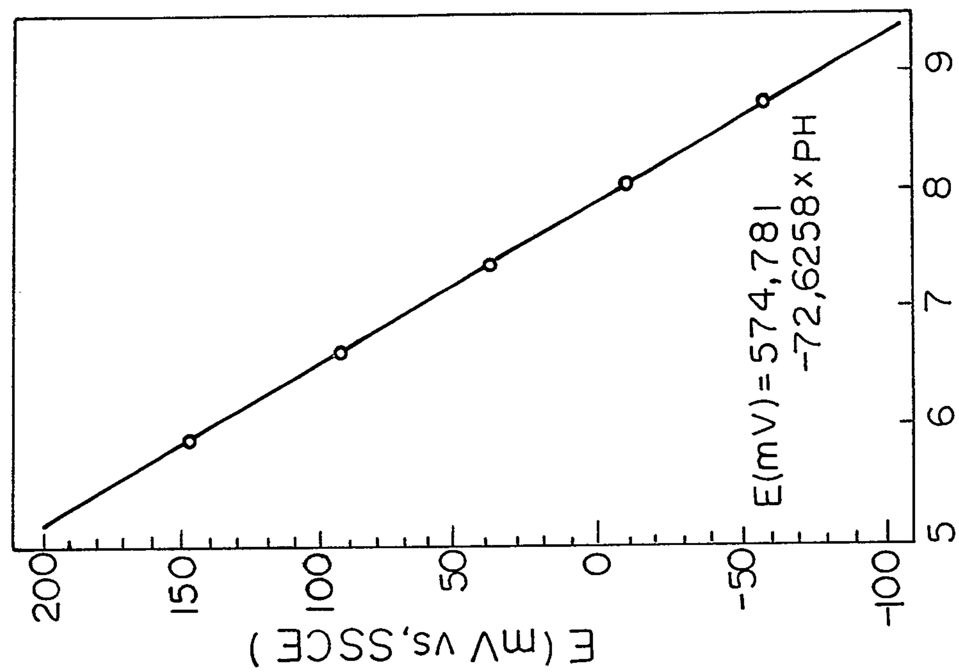

E (mV vs, SSCE )
200
150
100
50
0
-50
-100
5
6
7
8
9
PH
E(mV)=574,781
-72,6258×PH


FIG. 3B

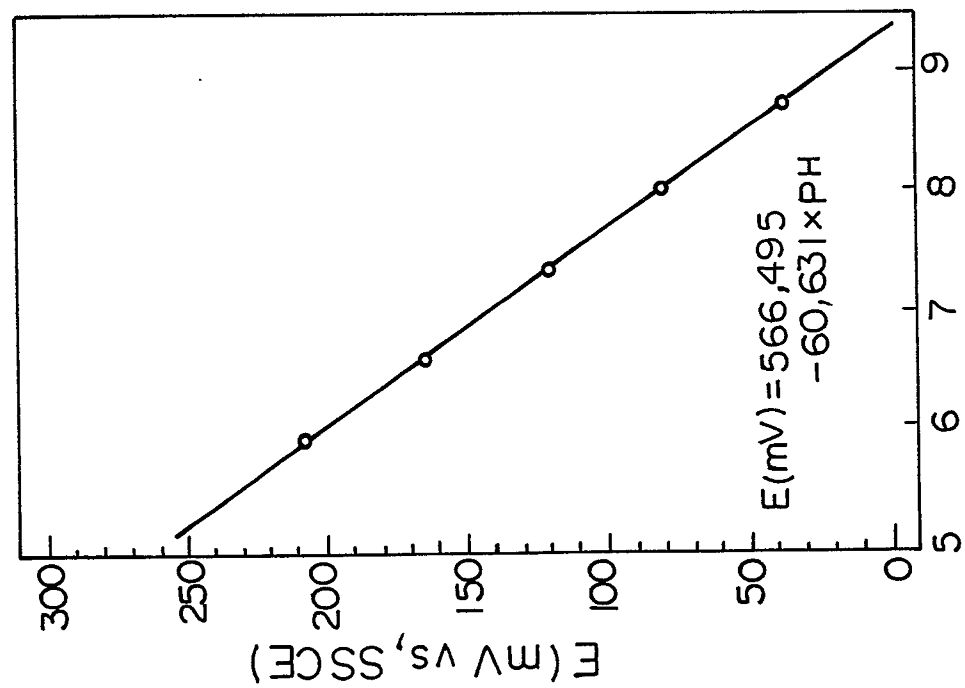

E (mV vs, SSCE)
300
250
200
150
100
50
0
5
6
7
8
9
PH
E(mV)=566,495
-60,631×PH


FIG. 3A

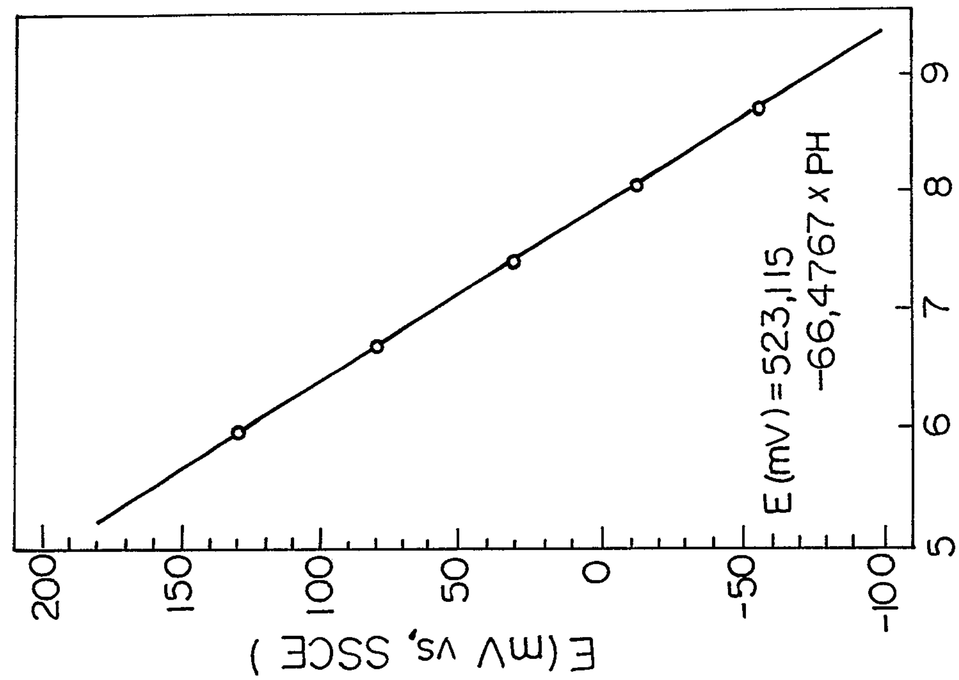
E(mV vs, SSCE )
200
150
100
50
0
-50
-100
5
6
7
8
9
PH
E (mV) =523,115
-66,4767 x PH

FIG. 4A

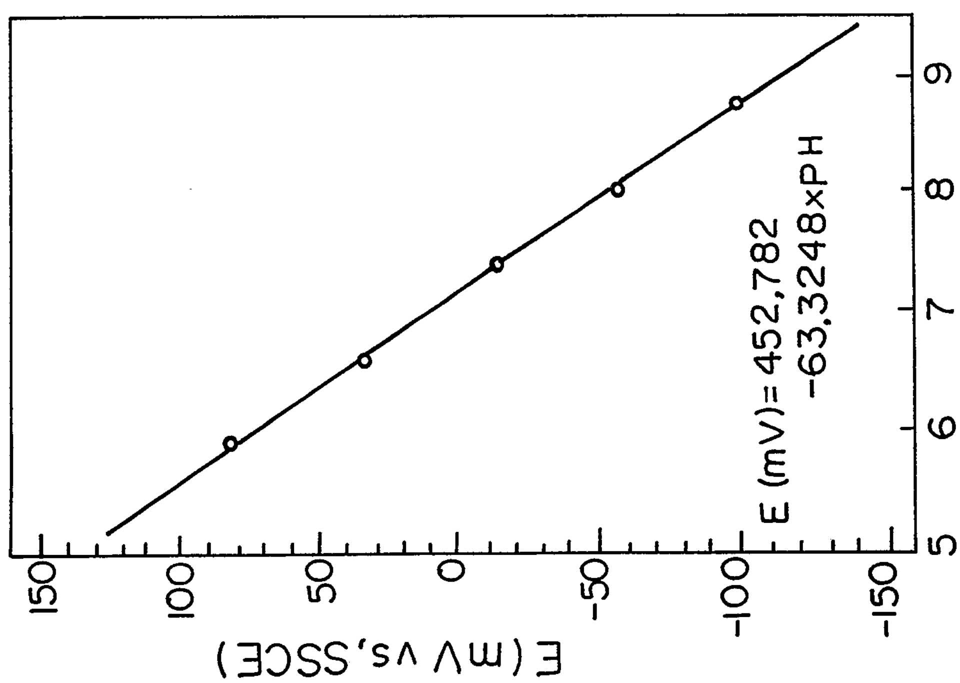
E (mV vs, SSCE)
150
100
50
0
-50
-100
-150
5
6
7
8
9
PH
E (mV)=452,782
-63,3248xPH

FIG. 3C

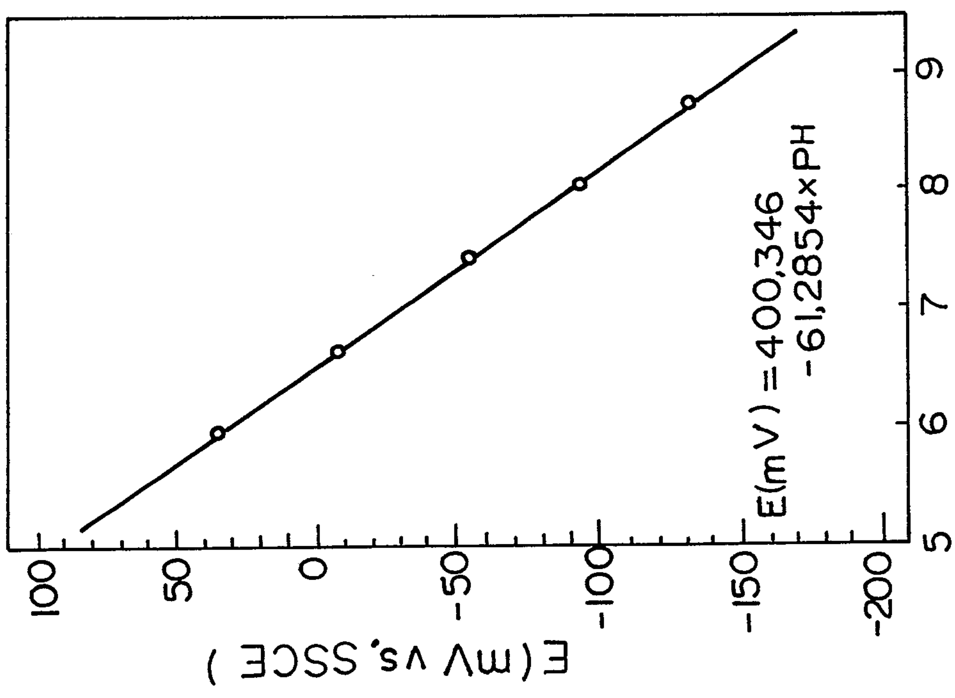
E (mV vs. SSCE )
100
50
0
-50
-100
-150
-200
5
6
7
8
9
PH
E(mV) =400,346
-61,2854×PH

FIG. 4B

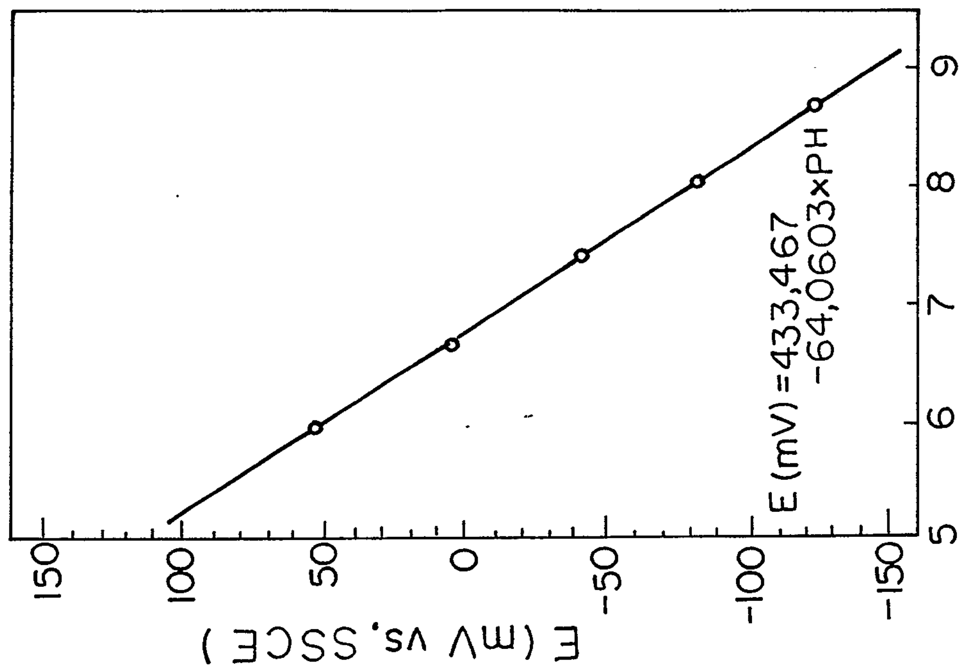
E (mV vs. SSCE )
150
100
50
0
-50
-100
-150
5
6
7
8
9
PH
E (mV) =433,467
-64,0603×PH

FIG. 4C

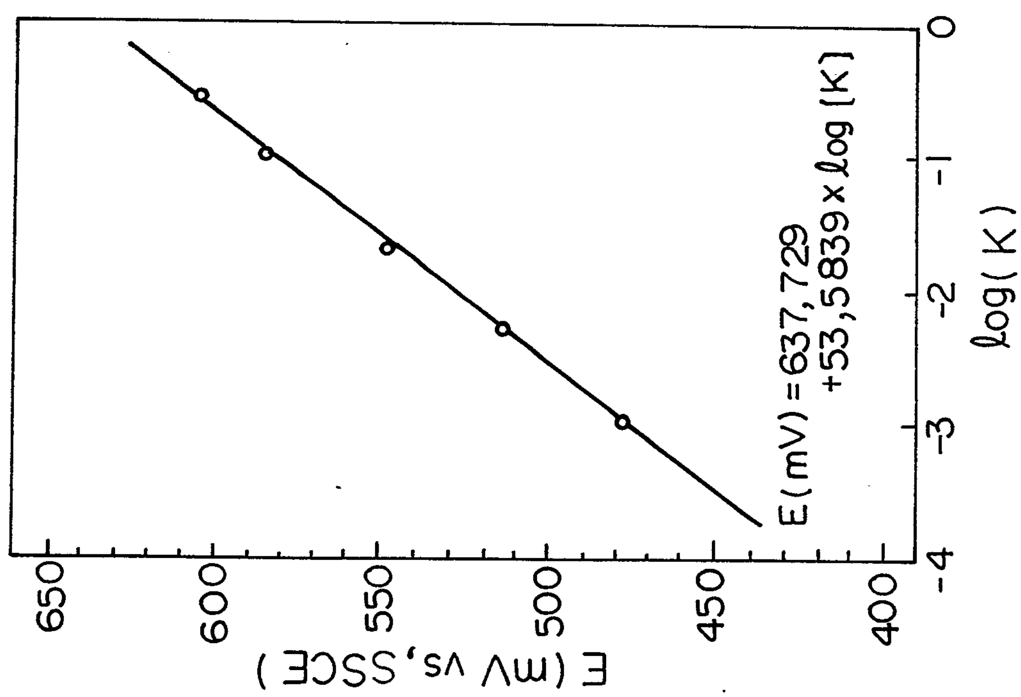
E (mV vs, SSCE )
650
600
550
500
450
400
-4
-3
-2
-1
0
log( K )
E(mV)=637,729
+53,5839 x log [K]

F I G. 5A

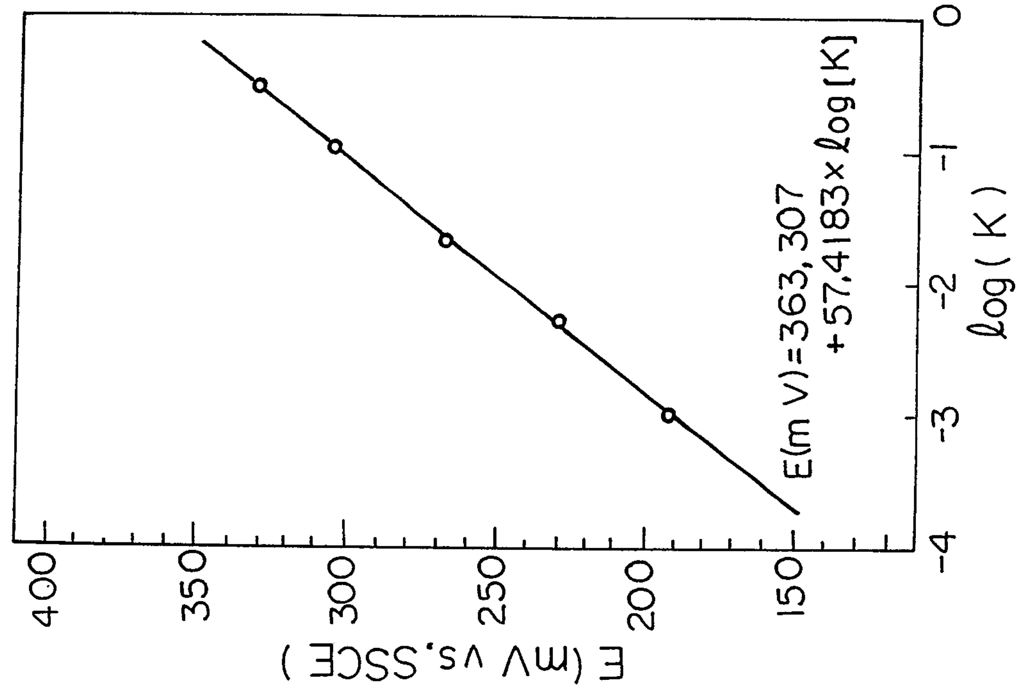
E (mV vs, SSCE )
400
350
300
250
200
150
-4
-3
-2
-1
0
log( K )
E(m V)=363,307
+57,4183 x log [K]

F I G. 5B

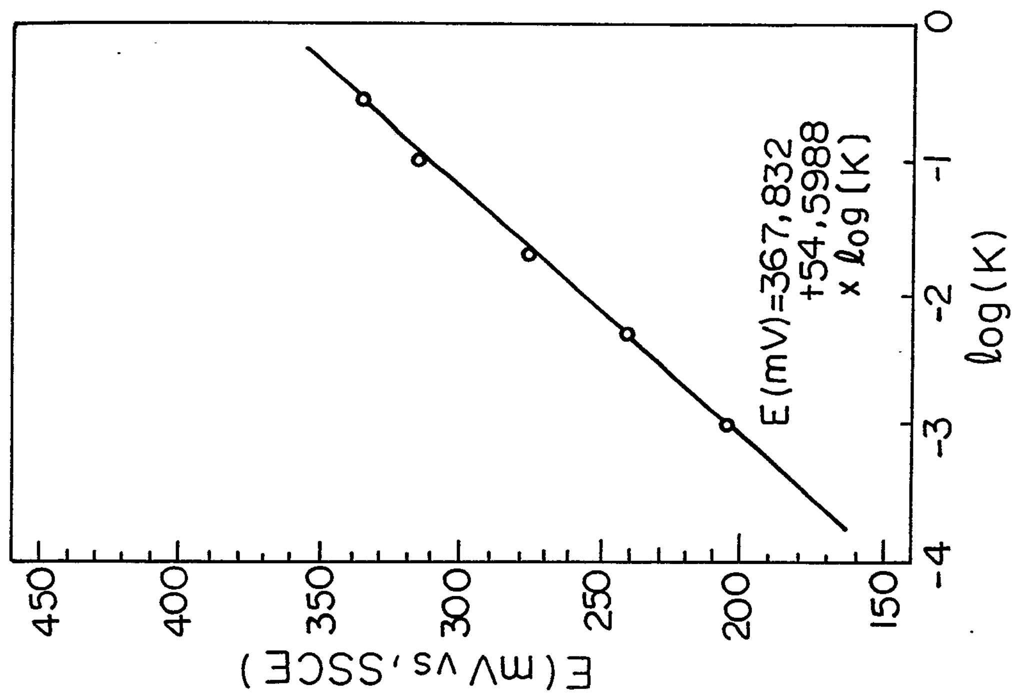
E (mV vs, SSCE)
450
400
350
300
250
200
150
-4
-3
-2
-1
0
log(K)
E(mV)=367,832
+54,5988
x log(K)

FIG. 5C

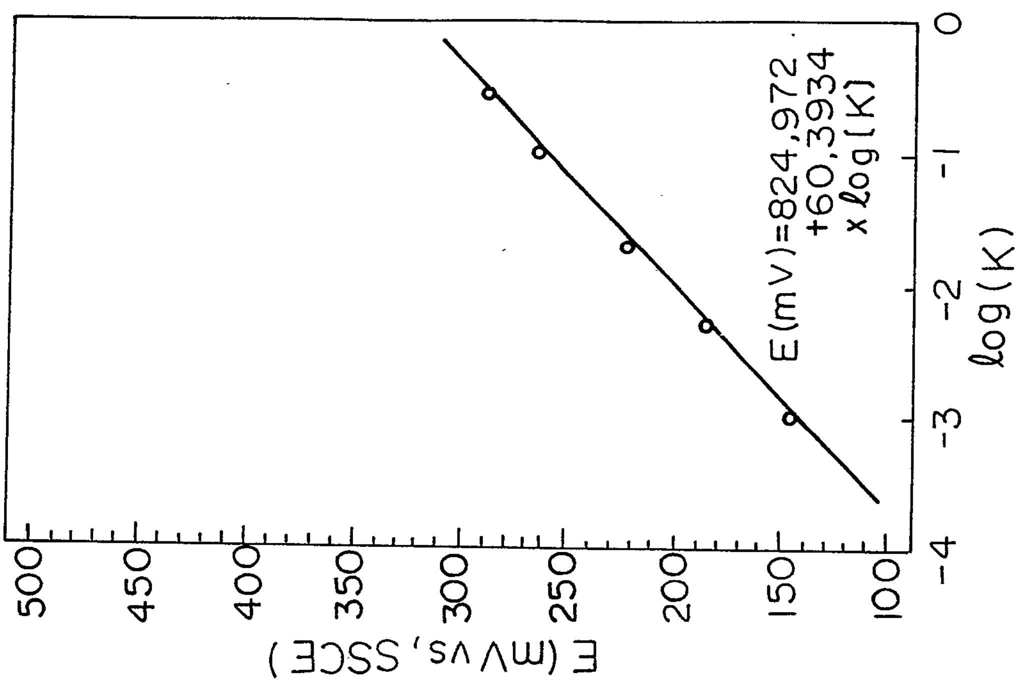
E (mV vs, SSCE)
500
450
400
350
300
250
200
150
100
-4
-3
-2
-1
0
log(K)
E(mV)=824,972
+60,3934
x log(K)

FIG. 6A

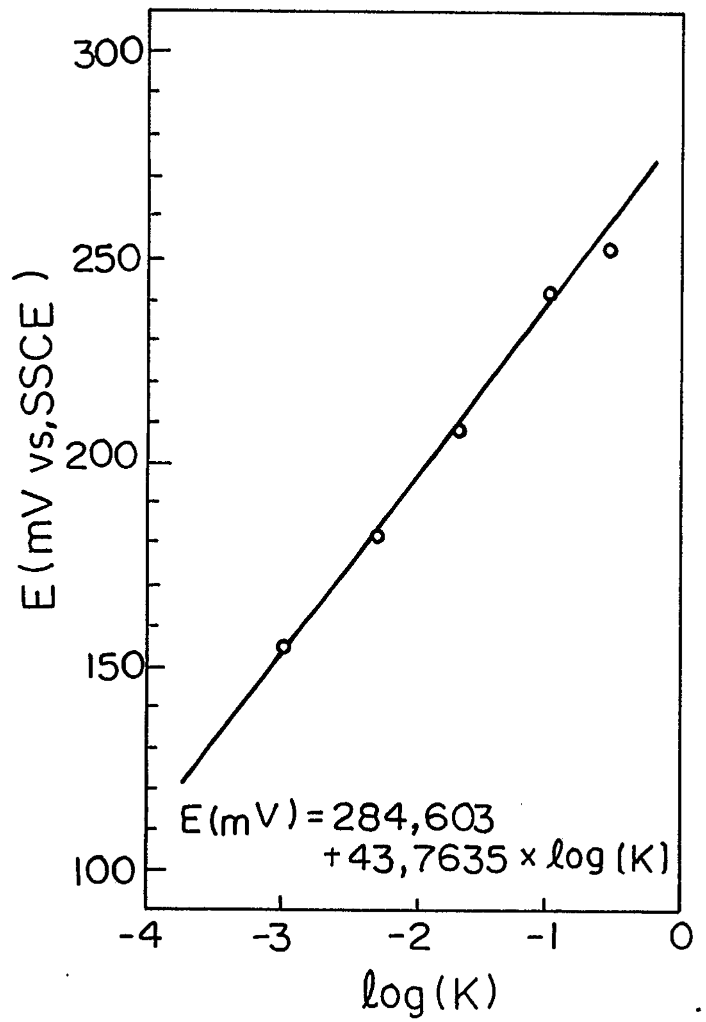
E (mV vs,SSCE )
300
250
200
150
100
-4
-3
-2
-1
0
log (K)
E(mV) = 284,603
+43,7635 × log (K)

F I G. 6B

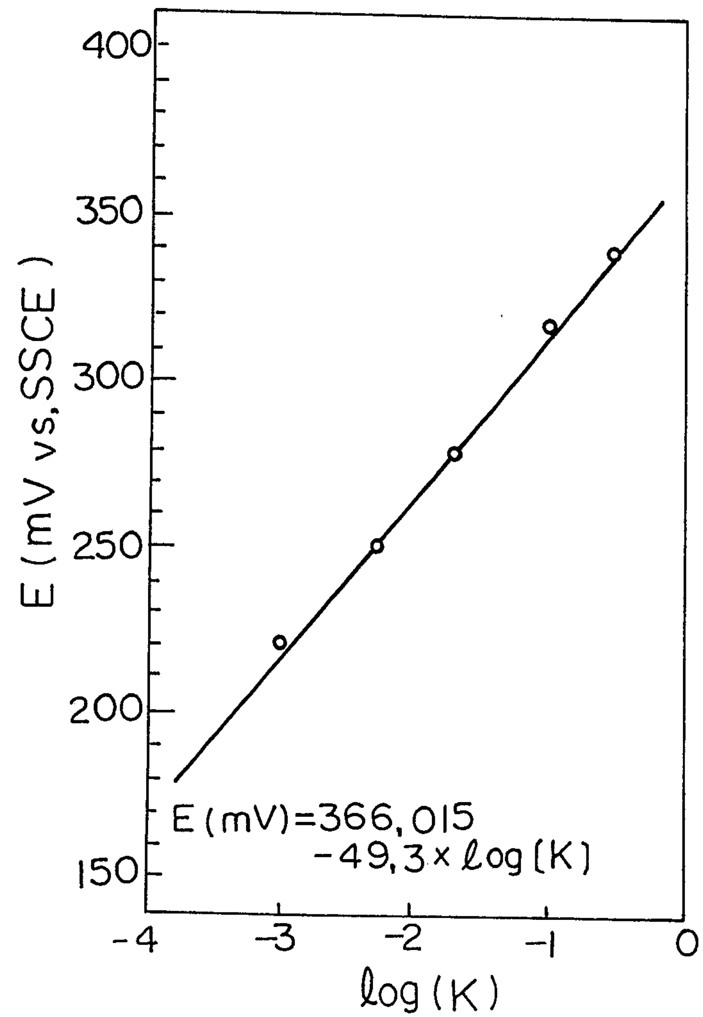
E (mV vs,SSCE )
400
350
300
250
200
150
-4
-3
-2
-1
0
log (K)
E (mV)=366,015
-49,3 × log (K)

F I G. 6C

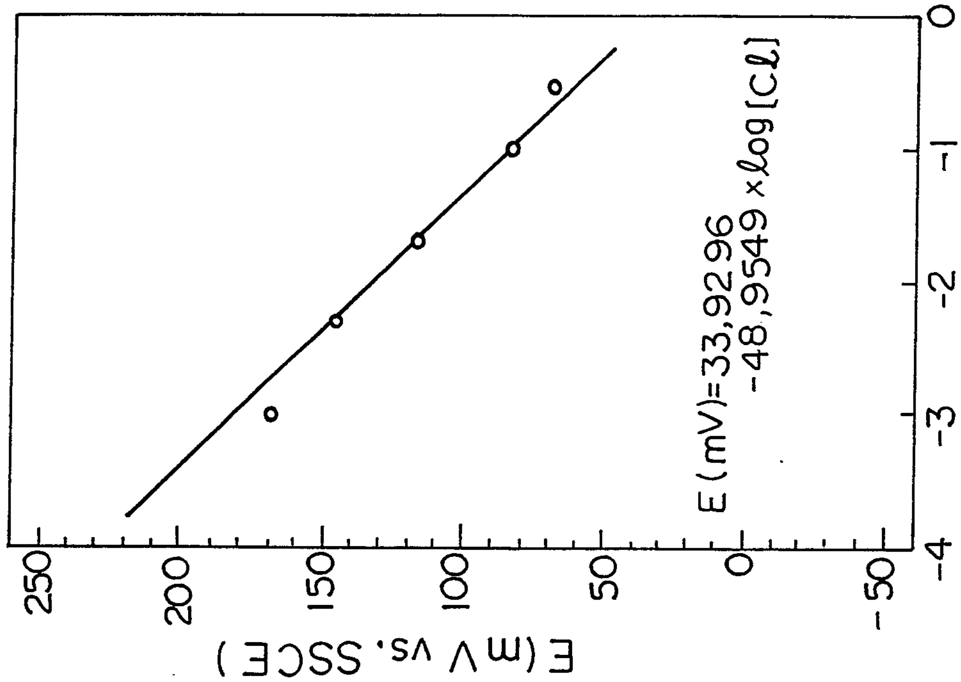

E (mV)=33,9296
-48,9549 × log [Cl]
log (Cl)
E (m V vs. SSCE )
250
200
150
100
50
0
-50
-4
-3
-2
-1
0


FIG. 7B

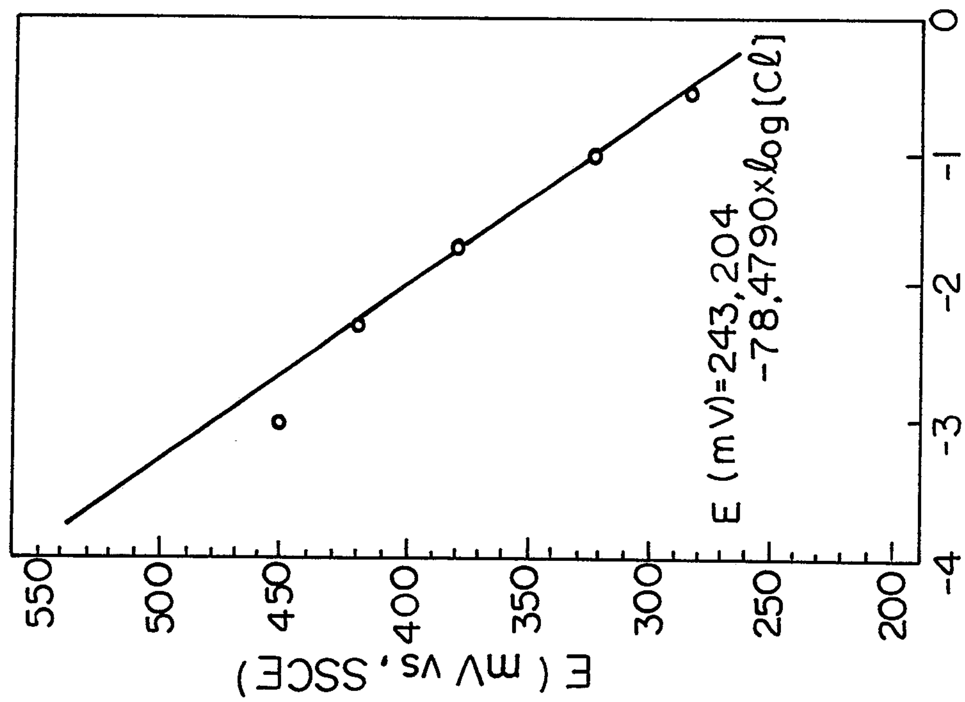

E (mV)=243,204
-78,4790 × log [Cl]
log (Cl)
E ( mV vs. SSCE )
550
500
450
400
350
300
250
200
-4
-3
-2
-1
0


FIG. 7A

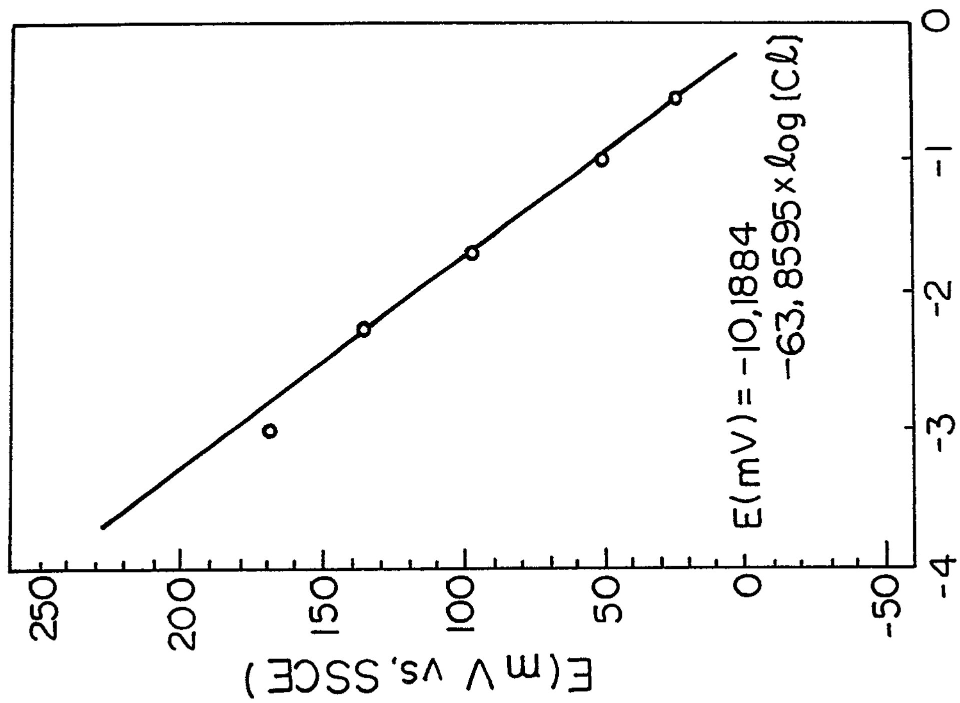
E(m V vs, SSCE )
250
200
150
100
50
0
-50
-4
-3
-2
-1
0
log(Cℓ)
E(mV)=-10,1884
-63,8595×log (Cℓ)

FIG. 7C

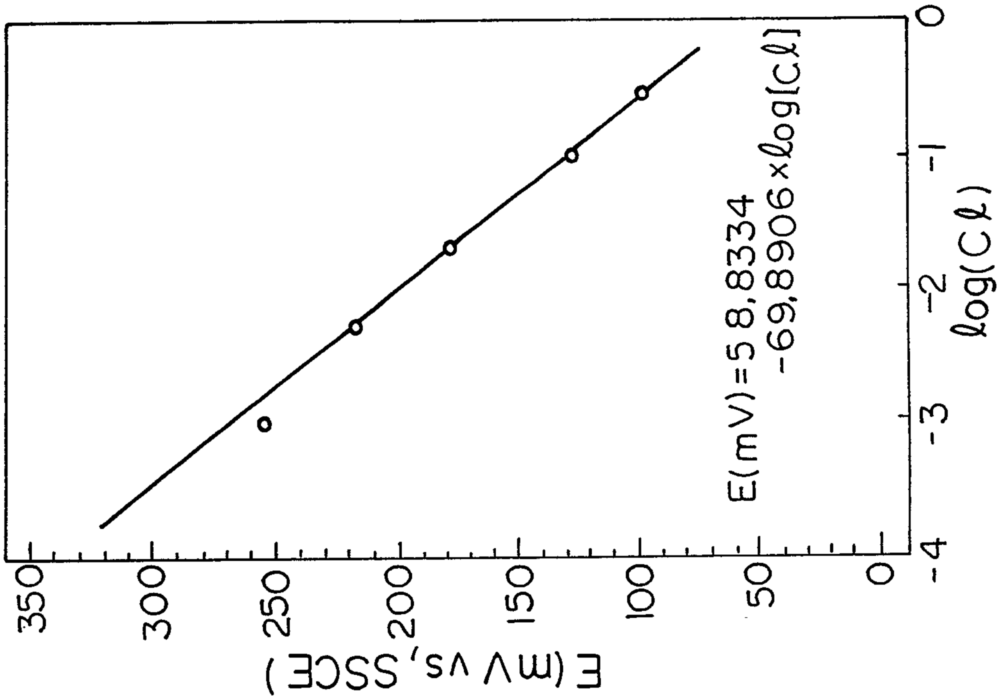
E (mV vs, SSCE )
350
300
250
200
150
100
50
0
-4
-3
-2
-1
0
log(Cℓ)
E(mV)=58,8334
-69,8906×log(Cℓ)

FIG. 8A

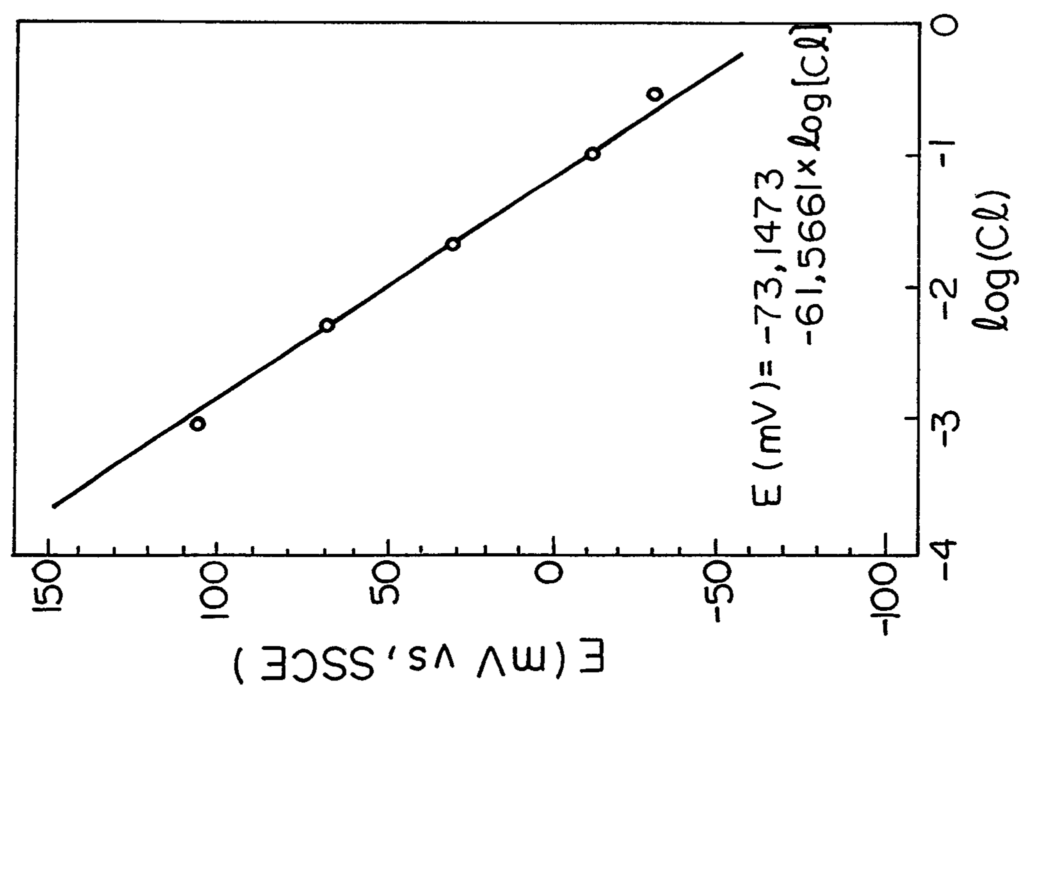
E (mV vs, SSCE)
150
100
50
0
-50
-100
-4
-3
-2
-1
0
log(Cl)
E (mV)= -73,1473
-61,5661 × log(Cl)

FIG. 8B

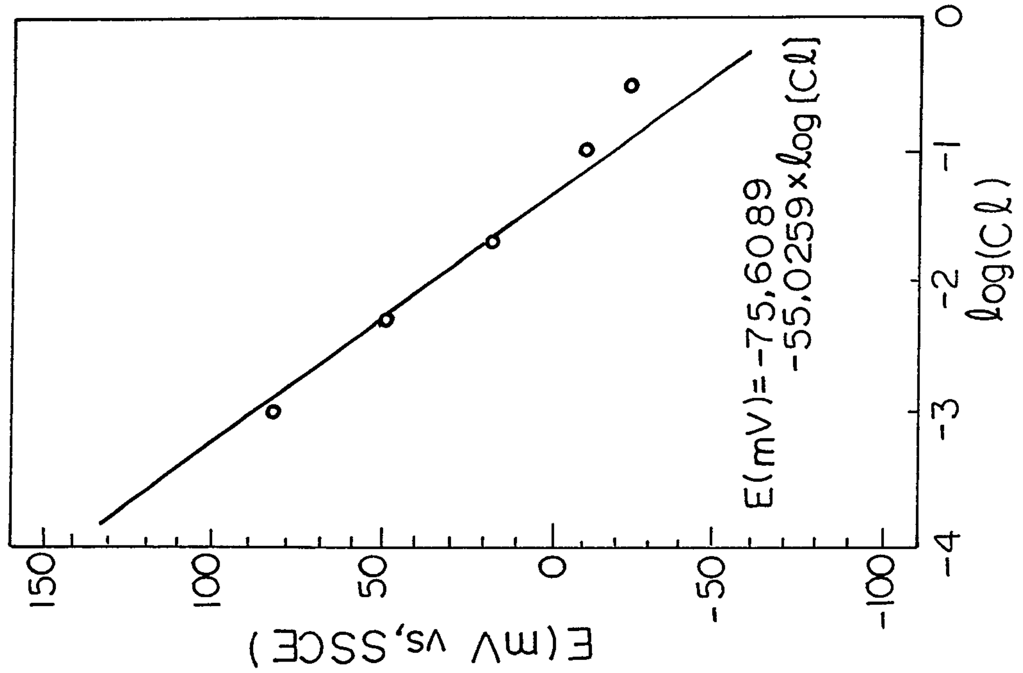
E (mV vs, SSCE)
150
100
50
0
-50
-100
-4
-3
-2
-1
0
log(Cl)
E(mV)=-75,6089
-55,0259 × log(Cl)

FIG. 8C

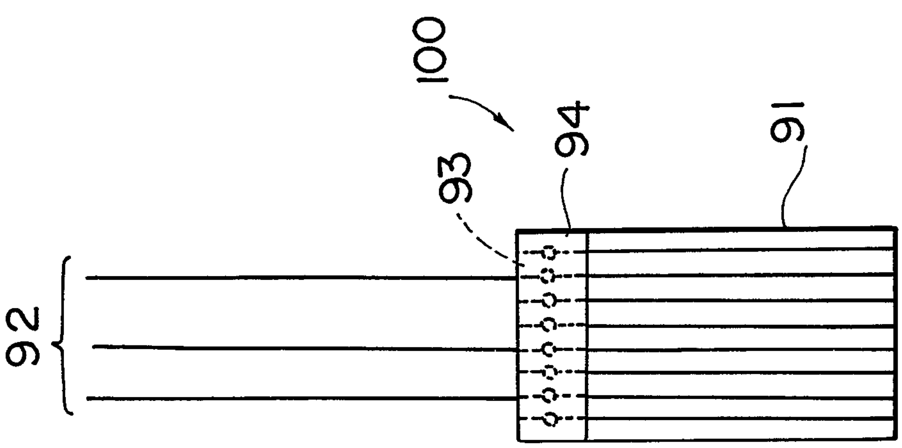


FIG. 9A

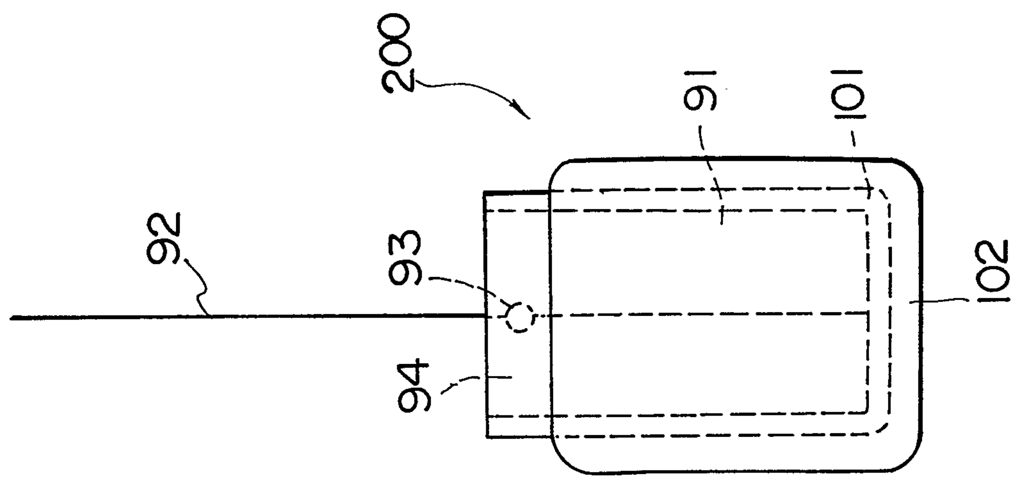


FIG. 9B

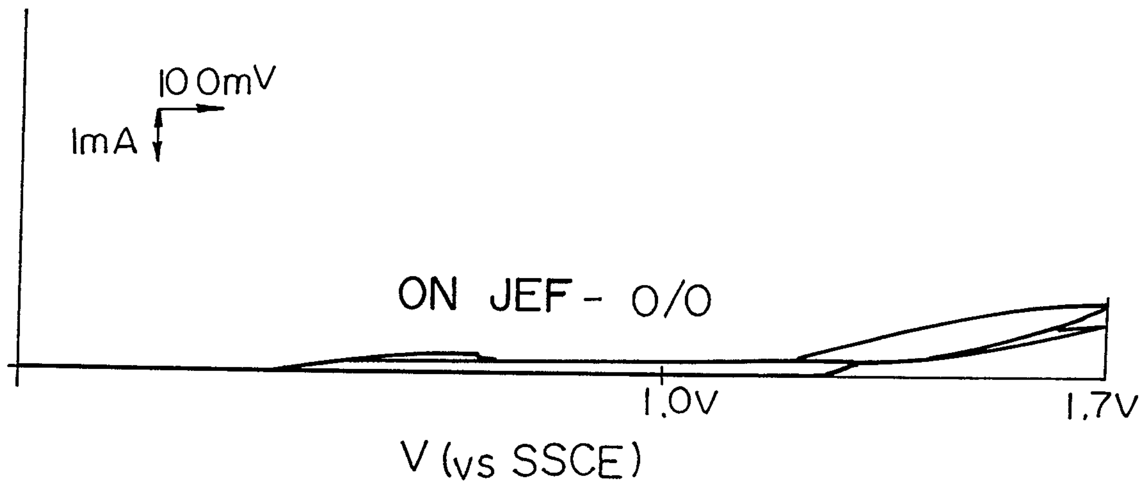


F I G. 10A

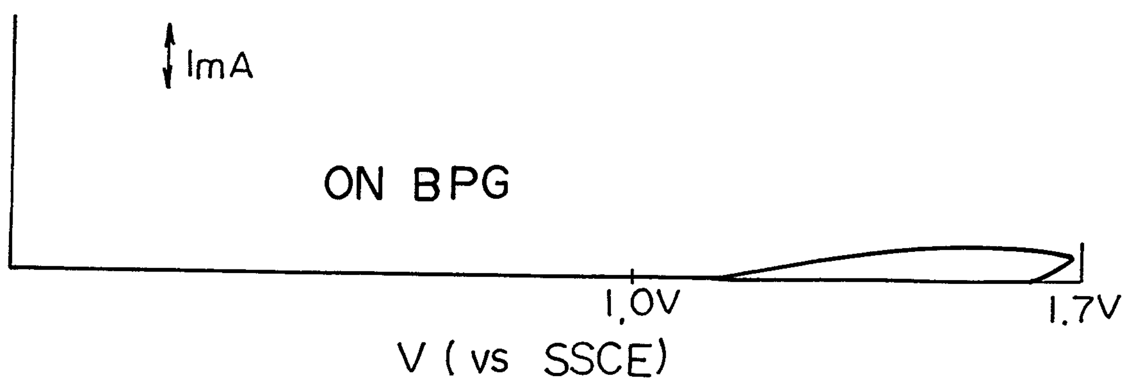


F I G. 10B

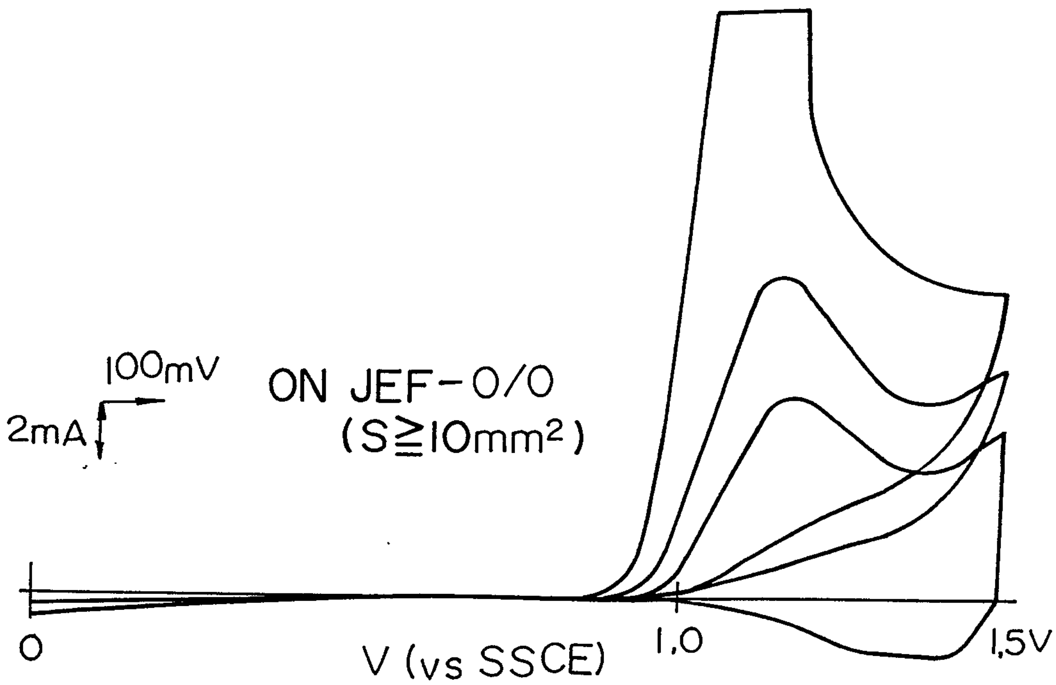


F I G. 11A

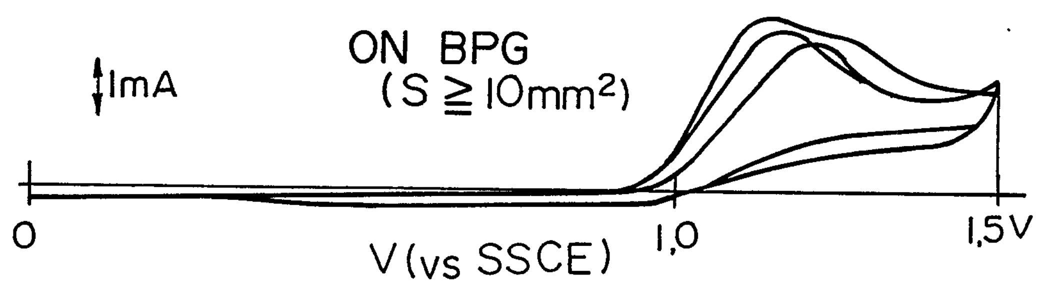


F I G. 11B

# INTERNATIONAL SEARCH REPORT

International Application No PCT/JP88/00689

**I. CLASSIFICATION OF SUBJECT MATTER** (if several classification symbols apply, indicate all) [6]

According to International Patent Classification (IPC) or to both National Classification and IPC

Int. $Cl^4$ G01N27/30, G01N27/46

**II. FIELDS SEARCHED**

Minimum Documentation Searched [7]

| Classification System | Classification Symbols |
|---|---|
| IPC | G01N27/30, G01N27/46 - 27/56 |

Documentation Searched other than Minimum Documentation to the Extent that such Documents are Included in the Fields Searched [8]

| | |
|---|---|
| Jitsuyo Shinan Koho | 1926 - 1988 |
| Kokai Jitsuyo Shinan Koho | 1971 - 1988 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| X | JP, A, 61-266952 (Terumo Corporation) 26 November 1986 (26. 11. 86) (Family: none) | 1-3 |
| X | JP, A, 61-251764 (Terumo Corporation) 8 November 1986 (08. 11. 86) (Family: none) | 1-3 |
| P | JP, A, 63-131056 (Terumo Corporation) 3 June 1988 (03. 06. 88) (Family: none) | 1-3 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| September 29, 1988 (29. 09. 88) | October 11, 1988 (11. 10. 88) |
| **International Searching Authority** | **Signature of Authorized Officer** |
| Japanese Patent Office | |